# EUROPEAN PATENT SPECIFICATION

(11) **EP 3 559 577 B1**
(45) Date of publication and mention of the grant of the patent: **06.08.2025**
(21) Application number: 16826283.0
(22) Date of filing: 22.12.2016
(51) Int. Cl.: F26B 25/00, B01D 46/02

(54) **POWDER DRYING SYSTEM WITH IMPROVED INLET ARRANGEMENT TO THE FILTER UNIT AND METHOD OF OPERATING THE FILTER UNIT OF SUCH A SYSTEM**
PULVERTROCKNUNGSSYSTEM MIT VERBESSERTER EINLAUFANORDNUNG ZUR FILTEREINHEIT UND VERFAHREN ZUM BETRIEB DER FILTEREINHEIT EINES SOLCHEN SYSTEMS
SYSTÈME DE SECHAGE DE POUDRE AVEC DISPOSITIF DE FILTRAGE AMÉLIORÉ À L'UNITÉ DE FILTRAGE ET PROCÉDÉ DE FONCTIONNEMENT DE L'UNITÉ DE FILTRAGE D'UN TEL SYSTÈME

(43) Date of publication of application: 30.10.2019
(73) Proprietor: GEA Process Engineering A/S, 2860 Søborg (DK)
(72) Inventor: FILHOLM, Thomas, 2900 Hellerup (DK); KULLMANN, Henrik, 2500 Valby (DK); JOENSEN, Tórstein Vincent, 2700 Brønshøj (DK)
(74) Representative: AWA Denmark A/S
(86) International application number: PCT/DK2016/050458
(87) International publication number: WO 2018/113860

(56) References cited:
- EP-A1- 0 223 873
- EP-A1- 0 223 873
- CN-Y- 2 626 585
- CN-Y- 2 626 585
- CN-Y- 2 805 884
- DK-A1- 201 570 798
- DK-A1- 201 570 798
- GB-A- 1 485 705
- US-A- 1 516 444
- US-A- 1 516 444
- US-A1- 2016 220 936

## Description

### Field of invention

The present invention relates to a powder drying system comprising at least one powder processing unit, and at least one filter unit including a filtering chamber accommodating a plurality of bag filters.

### Background of the invention

In the field of powder drying, high demands to the sanitary conditions of the system are present in general, and cleaning requirements for the drying and powder handling equipment are normally prescribed, typically by use of automated cleaning-in-place systems (CIP systems).

Cleaning of the individual operational units of the powder drying system typically takes place by means of a dedicated cleaning arrangement provided in connection with or in the operational unit itself. This applies also to the filter unit of the powder drying system. An example of a prior art arrangement is seen in Applicant's European patent No. 1 251 933 B1 where the filter unit is provided with a number of filter elements in the form of bag filters and filter cages. A further improvement of this arrangement is shown and described in Applicant's published DK patent application PA 2015 70798.

While these cleaning arrangements have proven to function well, there is an ongoing aspiration to improve the overall operating conditions of in particular the filter unit even further.

This has proven particularly important as the bag filters of the filter units of the powder drying system are made longer, and as a consequence, the cleanability of the bag filters is reduced as it is difficult to provide a burst of air that sufficiently cleans a long bag. Furthermore, longer bag filters create new problems when maintenance of the bag filters is required. Long bag filters are heavy which introduces health and safety issues for the workers who handle these bags. Long bag filter cages also generally require a joint as most installation sites do not have enough clearance above the filter unit. This joint increases the risk of incorrect assembly which can lead to cage separation and equipment damage. Additionally, long bag filters also lead to reduced utilization of the filter area and an increased pressure drop, just as the length in itself gives rise to problems with vibrations.

Attention has turned also to the issue of sufficiently distributing the gas to be filtered in the filtering chamber of the filter unit. Various different inlet arrangements exist in the prior art, for example 90° scrolled inlet, 180° scrolled inlet, single tangential inlet and double tangential inlet. An example of a single tangential inlet is seen in US patent No. 9,254,458 B2. The scrolled inlets have the advantage over the tangential inlets of requiring a smaller plant footprint, since additional space around the filter unit is not required. However, the geometry of the scrolled inlet introduces problems with bag vibration mainly due to flow instabilities, causing unnecessary bag filter wear. The tangential inlets mitigate some of these problems with vibrations but do not completely solve the problem and requires a large amount of plant footprint increasing the space requirement of the powder drying system. All of these inlet types also require a long straight section before the inlet into the filter unit to reduce flow instabilities to an acceptable level. These straight sections generally require high flow speeds to ensure that particles or dust carried by the flow are not separated from the flow and fall to the bottom of the duct sections.

However, such high speed of the gas to be filtered at the entry into the filtering chamber is not desirable from an operational point of view. These challenges are particularly pronounced in fields such as food and dairy production, in which the demands to the sanitary conditions are strict, and hence, the interior walls of all vessels, ducting and other conduits need to be smooth. As a consequence, it is not desirable to provide such sanitary systems with vanes and other flow restrictors that could otherwise diffuse the flow in the inlet ducting.

Also CN2626585Y discloses a powder drying system and method according to the prior art.

### Summary of the invention

With this background, it is therefore an object of the present invention to provide a powder drying system, by which it is possible to mitigate some of the drawbacks of the prior art.

The invention is a powder drying system according to claim 1 and a method of operating a powder drying system according to claim 17.

In a first aspect, these and further objects are obtained by a powder drying system of the kind mentioned in the introduction, which is furthermore characterized in that the inlet of the filtering chamber is positioned at the top portion of the filter unit, and that said inlet includes at least one inlet duct section adjacent the filtering chamber and arranged substantially centrally in the top portion of the filter unit.

Surprisingly, a substantially central inlet at the top portion of the filter unit decreases the required footprint for the inlet. The previously used footprint for a prior art inlet can instead be used for additional bag filters. This allows more space to be allocated to bag filters, increasing the number of bag filters included in the filter unit. This is an advantage since a better utilization of the total filter area is achieved by having a larger number of shorter bag filters in comparison with a smaller number of longer bag filters. This is due to the fact that the pressure drop in short bag filters is substantially lower than in long bag filters. The possibility to accommodate more bag filters in the same volume thus more than compensates for the reduced bag filter height in terms of capacity. The substantially centrally located inlet also has the advantage of allowing a slower inlet flow speed leading to fewer problems with bag filter cage vibrations. The term "substantially central" should be interpreted as encompassing also such positions of the inlet in which the center of the inlet is located somewhat off-center relative to the exact geometrical center of the filter unit.

The inventive concept is based on the recognition that the inlet types of powder drying systems of the prior art suffer from the same problem. Either the inlets of the prior art require a lot of plant footprint in order to ensure an acceptable flow behavior or an ill-behaved flow is let in the filter unit causing bag filter vibrations and wear. Furthermore, a large portion of the plant foot print is reserved to reduce flow instabilities of the inlet and thus not exploited as filtering space for bag filters. The improved utilization of the available space entails that it is either possible to increase the capacity of a filter unit with unchanged length of the bag filters, or reduce the length of the bag filters. In case it is chosen to reduce the length of the bag filters, the inventive concept thus alleviates the disadvantages of the prior art arrangements in that it is possible to obtain a reduced weight of each bag filter and without the need for joints, in addition to reducing the problems associated with pressure drop and vibrations.

According to the invention, said at least one inlet duct section is arranged substantially in parallel with the central vertical axis such that the gas entering the filter unit is allowed to flow substantially downwards. This configuration increases the advantages of the invention and contributes in particular to the reduction of detrimental flow conditions in the filtering chamber.

According to the invention, said at least one inlet duct section is substantially coaxial with the central vertical axis such that the gas is allowed to enter the filtering chamber substantially along the central vertical axis. This increases the advantages even further.

In a second aspect, a method of operating a filter unit of such a powder system is devised.

Further presently preferred embodiments and further advantages will be apparent from the following detailed description and the appended dependent claims.

### Brief description of the drawings

The invention will be described in more detail below by means of non-limiting examples of presently preferred embodiments and with reference to the schematic drawings, in which:
Fig. 1 shows a schematic view of the main components of a powder drying system in an embodiment of the invention;
Fig. 2 shows a schematic cross-sectional view of a filter unit in an embodiment of the invention;
Fig. 3 shows a schematic cross-sectional top view of a filter unit in an embodiment of the invention;
Fig. 4 shows a perspective view of an outlet in an embodiment of the invention;
Fig. 5 shows a top view of a filter unit in an embodiment of the invention;
Fig. 6 shows a schematic top view of a bag filter arrangement.
Fig. 7 shows a cleaning arrangement of a prior art powder drying system;
Figs 8a and 8b show a membrane valve of a cleaning arrangement of a prior art powder drying system; and
Figs 8c and 8d are views of a nozzle forming part of a cleaning arrangement of the inventive powder drying system.

### Detailed description of embodiments of the invention

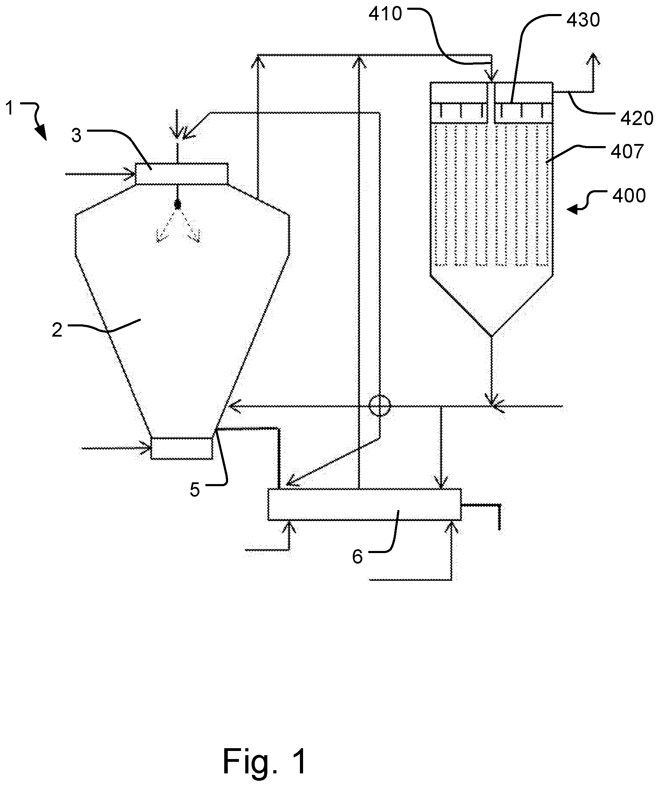

Fig. 1 shows a schematic view of the main components of a powder drying system comprising a powder processing unit which in the embodiment shown is in the form of a spray drying system 1. In a manner known per se, the spray drying system 1 comprises a spray dryer with a drying chamber 2 and a process air/gas supply device 3, typically including an air/gas disperser. It is noted that the term "gas" will be used alongside with the term "air" as "air/gas" and is to be interpreted as encompassing any gas that is suitable as process gas in such a spray drying system. The drying chamber 2 also incorporates atomizing means, such as nozzles and/or an atomizer wheel. The term "powder drying system" is intended to encompass such systems in which a powdery or particulate material is formed and/or processed. The material may either be provided as a feed of powdery or particulate material, or as a liquid feed to be dried. The powder drying system is also intended to cover cooling of the particulate material. In addition, or alternatively, to the spray dryer described, such a system could include one or more fluid beds, pneumatic dryers etc. The powder drying system thus incorporates a unit for forming powder in any suitable manner. Here, the powder forming unit is a powder processing unit in the form of a spray dryer with a drying chamber.

At the lower end of the drying chamber 2, an outlet 5 for dried material is provided. In the shown spray drying system 1, an after-treatment unit in the form of vibrating or static fluid bed 6 is provided. At one end, the vibrating or static fluid bed 6 receives dried material from the outlet 5 of the drying chamber 2 for further treatment of the material, which is then to be collected at an outlet at the other end of the vibrating or static fluid bed. Further upstream or downstream equipment may be present as well, but is not relevant to the present invention.

Furthermore, the powder drying system comprises in addition to the spray drying system 1 a filter unit 400, to which spent process air/gas with particles entrained in the process air/gas is conducted. The filter unit 400 has a configuration which will be described in further detail below. In Fig. 1 is shown an inlet 410 for spent process air/gas from one or more of the upstream operational units, a plurality of bag filters 407 and a clean air outlet 420. The filter unit 400 may form part of a series of powder recovery units including further filter units and cyclones or bag filters, or any combination thereof. Furthermore, a cleaning arrangement 430 is shown in Fig. 1.

A number of conveying lines connect the operational units with each other in a manner known per se and will not be described in detail.

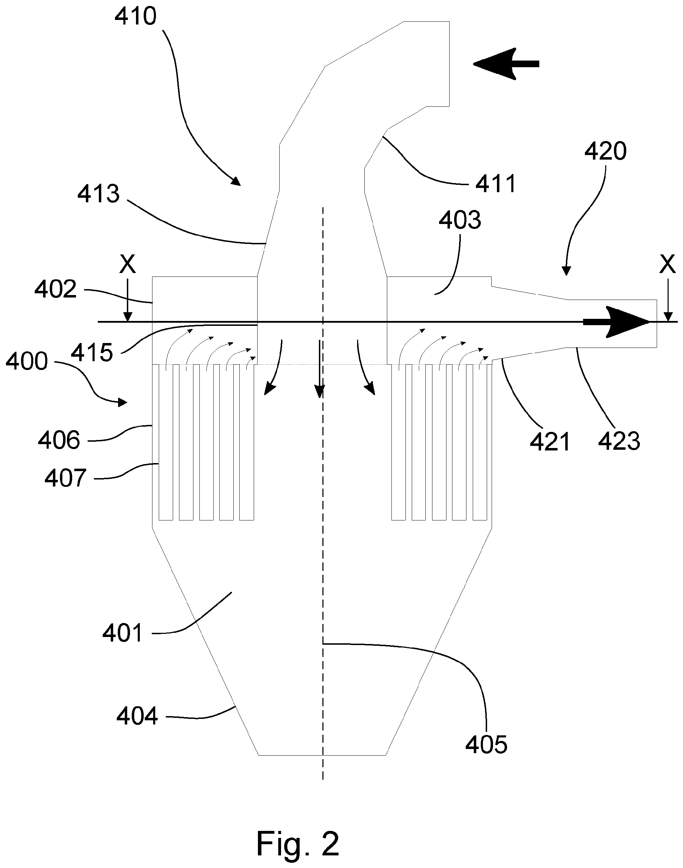

The general configuration of the filter unit 400 will now be described in more detail with particular reference to Fig. 2.

The filter unit 400 defines a central vertical axis 405 and includes a filtering chamber 401, a top portion 402 and an exhaust chamber 403. The top portion 402 here has the form of a cylinder with closed top surface. The top portion may also have other geometrical shapes, such as square, rectangular, hexagonal or other polygonal shape. Additionally, the filter unit 400 has a bottom portion 404, which is here substantially frusto-conical, but which may in principle have any suitable configuration. The bottom portion 404 delimits the lower section of the filtering chamber 401. A central portion 406 is provided between the top portion 402 and the bottom portion 404 of the filter unit. The plurality of bag filters 407 is in the embodiment shown located in the central portion 406, which is here provided as a substantially cylindrical portion of the filter unit 400 adjacent the top portion 402, i.e. in the upper section of the filtering chamber 401.

The filter unit 400 is arranged such that the gas entering from the inlet 410 flows into the filtering chamber 401, through the bag filters 407, out through the top opening of the bag filters 407 and into the exhaust chamber 403. As is apparent, the inlet 410 and the outlet 420 are connected to the top portion 402 of the filter unit 400 and arranged such that the gas enters the filter unit 400 along the central vertical axis 405 in the specific embodiment shown. The powder may be collected at the bottom portion 404 of the filter unit 400.

It is important that the inlet is arranged such that the gas flow, when it enters the filter unit, has as few flow instabilities as possible. Flow instabilities can be defined as the gas flow having a transient character as opposed to a steady state flow. According to the invention said inlet 410 and outlet 420 are connected to the top portion of the filter unit 400 and arranged such that the gas enters the filter unit 400 along a central vertical axis. This has the advantage of reducing the susceptibility of bag filters to flow instabilities by having a gas flow in parallel with the length axis of the bag filters 407 thus reducing the transient perpendicular force on the bag filters 407.

The top portion 402 of the filter unit 400 is located at the uppermost part of filter unit 400, for example as a substantially cylindrical portion with a closed top, along the central vertical axis 405.

According to the invention, the at least one inlet duct section of the inlet 410, adjacent the filtering chamber 401 comprises an angled duct 411, a transitional duct 413, and an internal duct 415. The angled duct 411 connects the duct having gas carrying dust from the previous component of the spray drying system with the transitional duct 413. According to the invention, the angled duct 411 has the form of pipe segments forming substantially a 90-degree bend, and the transitional duct 413 may have a shape changing from hexagonal to circular. The shape of the internal duct is chosen to improve the explosion pressure resistance of the top portion 402. The transitional duct 413 is attached to the top portion 402 of the filter unit 400 and the internal duct 415. The internal duct 415 connects the transitional duct 413 with the filtering chamber 401 of the filter unit 400. Thus, the inlet 410 allows gas from the previous or upstream component of the spray drying system to enter the filtering chamber 401 of the filter unit 400.

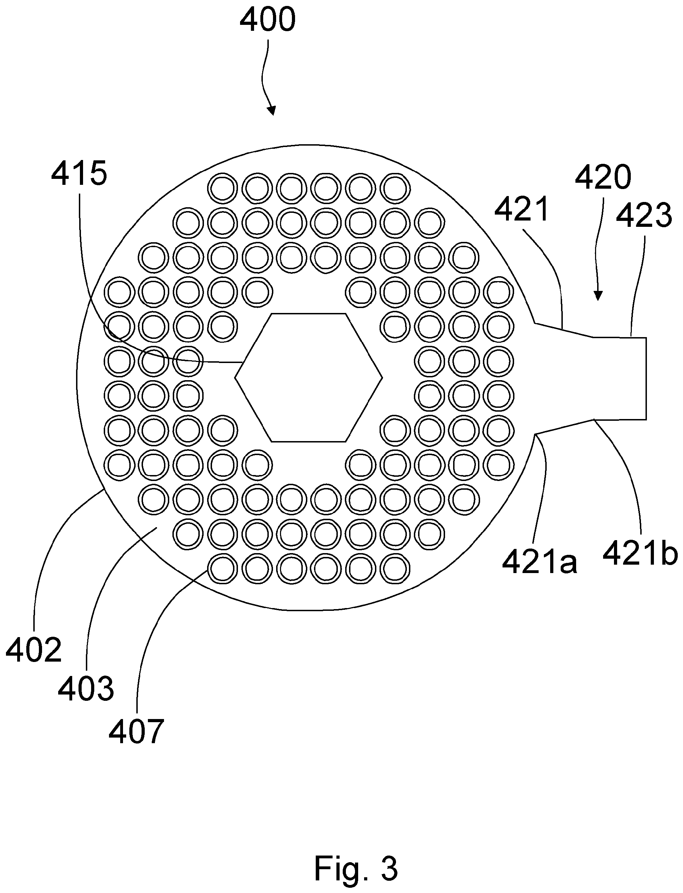

In the embodiment shown, the plurality of bag filters 407 is located in the space between the periphery of the filter unit 400 defined by the central portion 406 and the periphery of the extension of the internal duct 415 which here forms the inlet duct section adjacent the filtering chamber 401. This has the advantage that the stream of gas to be filtered flows into the filtering chamber 401 at a location where no bag filters 407 are present. This is particularly clear from Figs 2 and 3.

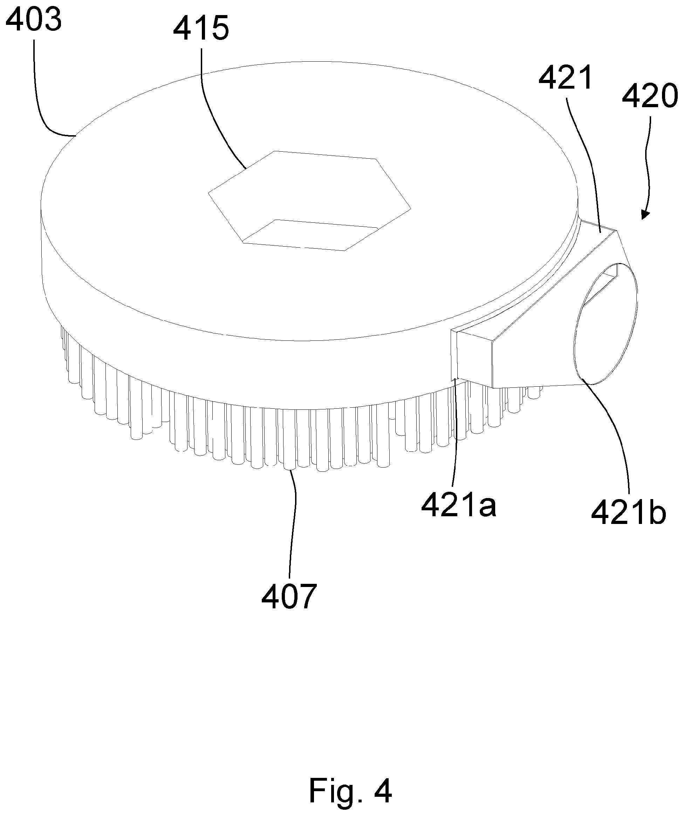

Referring now in particular also to Fig. 4, the outlet 420 comprises a transitional duct 421 and a straight portion 423 as shown in Fig. 3. In one embodiment of the invention the edges 421a between the exhaust chamber 403 and the transitional duct 421, and the edges 421b between the transitional duct 421 and the straight portion 421b are rounded. This has the advantage of allowing a shorter transitional duct 421 which reduces the plant footprint required by the filter unit 400. It also reduces the risk of remaining deposits and/or cleaning agent after cleaning-in-place.

In the filter unit 400, a number of elongated tubular filter elements or bag filters 407 are suspended substantially vertically in a support structure. The bag filters of the filter elements have a filter surface which at least includes the bag filter wall, which is typically cylindrical. The bag filter walls are typically made of filter wall material that can be a substantially soft material, such as a felt, a polymer mesh or weave, supported by a basket in the interior of the bag, or the filter wall material can be a self-supporting substantially rigid porous material, such as metal fibers or ceramic fibers. The bottom of each bag filter 407 may either be provided by the same filter material as the bag filter wall, or provided as a solid bottom, possibly also provided with draining means.

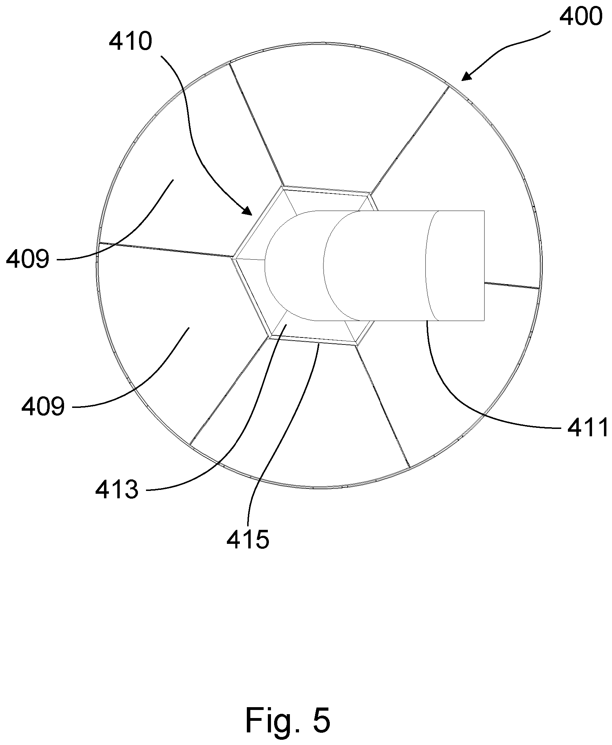

Turning now to Fig. 5, the configuration of the bag filters 407 into a plurality of bag filter segments is shown.

The bag filters 407 of the filter unit 400 can be arranged in bag filter segments 409, as shown in the embodiment of Fig. 5. According to the invention, the filter unit 400 can comprise a plurality of bag filter segments 409. In this embodiment the filter unit 400 comprises six bag filter segments 409 and the number of sides of the internal duct 415 correspond to the number of bag filter segments. The bag filter segments 409 allow increased stiffness of the supporting structure and also contribute to facilitating the handling of the components of the filter unit 400 during installation and maintenance, including release and removal of the individual filter bag segments 409. The number of bag filter segments may also be for instance two, three, four or any other suitable number. The distribution of bag filters in each segment may be equal or vary.

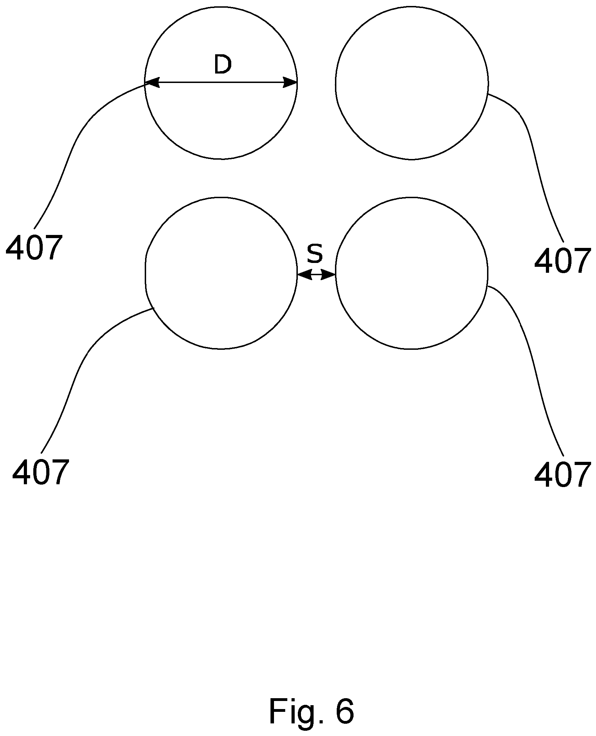

The dimensions and number of filter elements including bag filters 407 in the filter unit 400 depends on the desired filter capacity. The smallest filter has a single filter element. Plants for treating, handling or producing pharmaceuticals typically use smaller filter units having for instance from 2 to 25 filter elements, and plants for foodstuffs, dairies and chemicals typically use very large filter units with many hundreds of filter elements in a single filter unit. The bag filters can be arranged in a square grid as shown in Fig. 6, alternatively the bag filters could be arranged in triangular grid, a hexagonal grid, or any other type of polygonal grid. The diameter of each bag filter is shown as D and the distance between each bag filter is shown as S. As a general rule the capacity of the system increases with increasing filtering area. The filtering area being defined as the surface area of the bag filters. The individual filter element according to the invention has a length in the range from 1 to 8 m, for instance the length is typically at least 3 meters long, but lengths over 5 meters long or even over 6 meters long are conceivable as well.

The diameter D of each bag filter is typically in the range of 10 to 25 cm, preferably in the range 15 to 20 cm, and even more preferably in the range 17 to 19 cm, in the embodiment shown about 18 cm.

The distance between neighboring bag filters, S, is typically no more than 5 cm, preferably no more than 4.5 cm and even more preferably no more than 4 cm.

The number of bag filters 407 may be at least 50 bag filters 407, preferably at least 100 bag filters 407, more preferably at least 200 bag filters, and more preferably at least 400 bag filters.

During operation of the filter unit 400 process gas carrying product enters the unit through inlet 410 and flows into the area around the filter elements in the form of individual bag filters 407. The gas continues through the bag filter walls of the filter elements 407 and flows up to an upper outlet side for clean filtered gas and eventually exits through the outlet 420. As the gas passes the filter walls product carried by the process gas is retained by the filter elements 407. The retained material is partially left on the filter elements and partially drops down and accumulates in the lower section of the filter unit 400. The accumulated product can then be extracted through an outlet port. The filter unit may be a separate external unit connected to a gas outlet for particle loaded processing gas in a plant, or be integrated into a processing unit producing the particle loaded gas, such as a spray drying apparatus or a fluid bed apparatus. As the filtration proceeds some of the filtered off particles or dust accumulate on the outside of the filter element 407, and has to be removed in order to avoid building up of dust cakes. Cleaning is effected during continuous operation of the filter unit by using high pressure reverse flow gas cleaning.

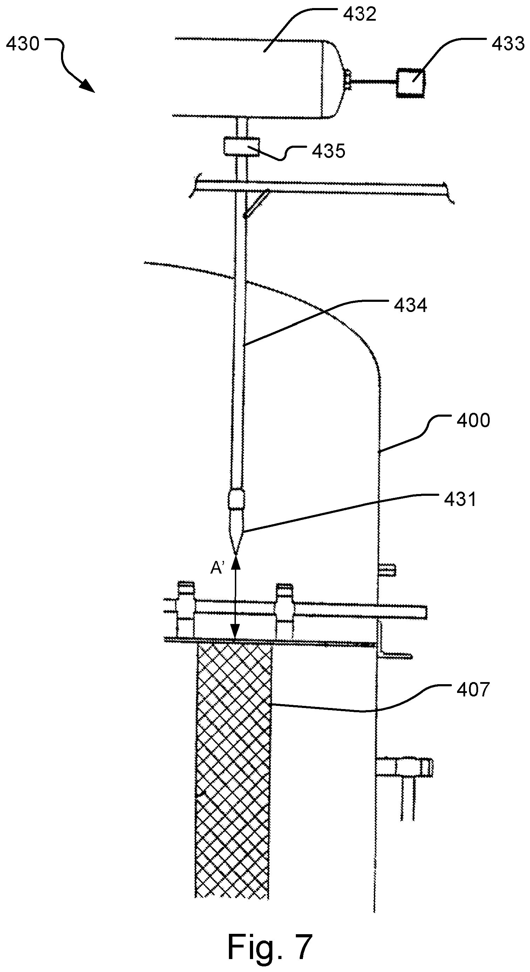

A cleaning arrangement, here generally designated 430 in Fig. 7, includes a filter cleaning nozzle 431 positioned at a distance A' above the filter element 407. The nozzle 431 ejects a burst of cleaning gas down into the filter element 407 at intervals adapted to the current filtration process.

The jet-like burst of reverse flowing cleaning gas produces a very quick pressure increase inside the filter element so that the filter wall accelerates outwards. The pulse of cleaning gas has a very short duration, such as from 0.10 s to 0.50 s, typically about 0.2 s, and the filter wall is therefore immediately inflated to the maximum diameter by the gas pressure difference across the filter. Especially for non-rigid filter materials the result of the cleaning action is consequently of mainly mechanical nature, because the particles or dust on the filter element are shaken or kicked loose by the movement of the filter material.

A pressure vessel 432 contains pressurized primary cleaning gas. In this prior art cleaning arrangement, the cleaning gas is provided at a pressure in the range of 3 to 10 barg, typically from 4 to 6 barg. A gas supply device 433, such as a compressor, delivers compressed air or another gas at a set pressure. The nozzle 431 is positioned at the end of a nozzle lance 434 and a closure device 435 is positioned in connection with the pressure vessel 432. The setting of the pressure depends on the length of the filter element 407 and the size of the nozzle 431. One and the same nozzle size can be used for several different lengths of filter elements by suitably varying the setting of said pressure so that a higher pressure is used for longer elements and vice versa. This setting of the pressure can be done at the commissioning of the filter. The gas supply device can also be of a type allowing adjustment of the gas pressure during operation in order to accommodate for variations in the filtration conditions, possibly dynamically controlled by the pressure drop over the filter or by clogging of the filter.

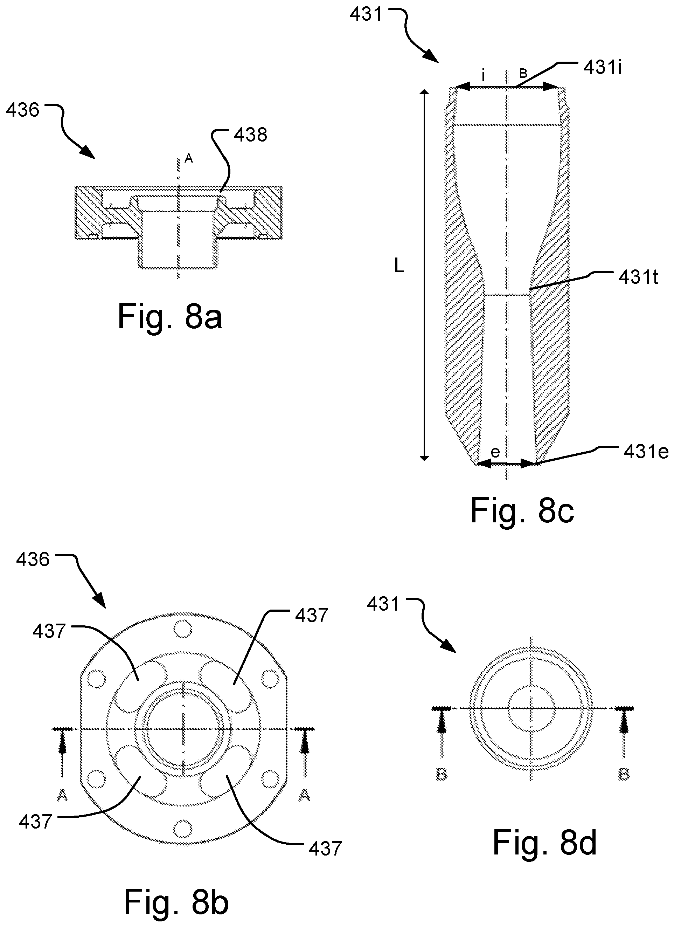

The dimensions of the nozzle 431 include a predefined nozzle inlet diameter i, a nozzle throat diameter t, and a nozzle exit diameter e shown in Fig. 8c. A membrane valve 436' is provided, including membrane valve slots 437' and membrane valve openings 438'.

Further details regarding the nozzle 431 of the specific embodiment include that the nozzle has a continuous curve from the throat 431t to the exit 431e.

The nozzle 431 comprises a membrane valve 436, which has a valve opening 438 shown in Fig. 8a of at least 4 mm.

The nozzle 431 may have a nozzle exit diameter e of up to 20 mm, preferably up to 17 mm.

The nozzle 431 has a nozzle throat diameter t of up to 20 mm, preferably up to 14 mm.

The length of the nozzle 431 is shown in Fig. 8c as L. The ratio of the throat diameter 431t to the length of the nozzle 431 may be 0.02 to 0.2, preferably 0.05 to 0.15, and even more preferably 0.07 to 0.13.

Although not described in detail, the distance between the nozzle exit 431e and a top of said plurality of bag filters 407 may lie between -20 mm and +700 mm. The nozzle can be moved with a rotating and/or robotic nozzle system so that a nozzle can be used to pulse different bag filters.

The person skilled in the art realizes that the present invention by no means is limited to the preferred embodiments described above. On the contrary, many modifications and variations are possible within the scope of the appended claims. For example, the inlet can be of a different shape than hexagonal, for example round, oval, triangular, square, pentagonal, octagonal, or any other polygonal.

The invention offers several advantages over different prior art solutions. Due to allowing a larger part of the plant footprint to be allocated to bag filters and thus enabling a more compact system, the wear on the individual bag filters is reduced. The possibility to reduce the length of the bag filters while maintaining or even increasing the capacity entails that the weight of the bag filters is reduced, just as there is no need for a joint. The pressure drop is reduced, and the problems of vibrations also reduced.

It should be noted that the above description of preferred embodiments serves only as an example, and that a person skilled in the art will know that numerous variations are possible without deviating from the scope of the claims.

## Claims

1. A powder drying system comprising
at least one powder processing unit (1), and
at least one filter unit (400) defining a central vertical axis (405) and including
a filtering chamber (401) accommodating a plurality of bag filters (407), each having a bag filter wall, a top opening and a length in the range of from 1 m to 8 m,
a top portion (402), and
an exhaust chamber (403) at or near the top portion (402),
in which the filtering chamber (401) is provided with an inlet (410) configured to allow entry of processed powder carrying gas to be filtered by passing through the bag filter wall of the bag filters (407), and the exhaust chamber (403) has an outlet (420) configured to allow exhaust of filtered gas flowing upwards from the bag filters through the top opening thereof,
wherein the inlet (410) of the filtering chamber (401) is positioned at the top portion (402) of the filter unit (400), and said inlet (410) includes at least one inlet duct section adjacent the filtering chamber (401) and arranged substantially centrally in the top portion (402) of the filter unit (400),
which inlet duct section is arranged substantially coaxial with the central vertical axis (405) such that the gas entering the filter unit (400) is allowed to flow substantially downwards along the central vertical axis,
wherein said at least one inlet duct section comprises an internal duct (415) and a transitional duct (413),
which internal duct (415) is adjacent the filtering chamber (401) and extends substantially in parallel with the central vertical axis (405),
which transitional duct (413) connects the internal duct (415) to an angled duct (411),
which angled duct (411) has the form of pipe segments forming a substantially 90-degree bend to the internal duct (415),
wherein
the distance between the angled duct (411) and the end of the internal duct (415) adjacent the filtering chamber (401) exceeds the length of a bag filter (407).

2. A powder drying system according to claim 1, wherein the internal duct (415) at the end adjacent the filtering chamber (401) has a hexagonal shape.

3. A powder drying system according to any one of the preceding claims, wherein the outlet (420) is connected horizontally to the exhaust chamber (403) at the top portion (402) of the filter unit (400).

4. A powder drying system according to claim 3, wherein the outlet (420) comprises a transitional duct (421) and a straight duct (423),

5. A powder drying system according to claim 4, wherein the edges (421a) between the transitional duct (421) and the exhaust chamber (403) and/or the edges (421b) between the transitional duct (421) and the straight duct (423) are rounded.

6. A powder drying system according to claim 4 or 5, wherein the cross-section of the straight duct (423) is substantially circular and the cross-section of the transitional duct (421) is variable from a substantially rectangular cross-section at the connection to the exhaust chamber (403) and substantially circular at the end adjacent the straight duct (423).

7. A powder drying system according to any one of the preceding claims, wherein said plurality of bag filters (407) comprises at least 50 bag filters (407), preferably at least 100 bag filters (407), and more preferably at least 200 bag filters (407), and even more preferably at least 400 bag filters (407).

8. A powder drying system according to any one of the preceding claims, further comprising a number of bag filter segments (409), wherein each includes a plurality of bag filters (407).

9. A powder drying system according to claims 2 and 8, wherein the number of bag filter segments (409) is six, corresponding to a respective side of the hexagonal end of the internal duct (415).

10. A powder drying system according to any one of the preceding claims, wherein the bag filters are no longer than 6 m, preferably no longer than 5 m.

11. A powder drying system according to any one of the preceding claims, wherein the bag filters have a diameter (D) in the range of 10 to 25 cm, preferably in the range 15 to 20 cm, and even more preferably in the range 17 to 19 cm.

12. A powder drying system according to any one of the preceding claims, wherein the distance (S) between bag filters is no more than 5 cm, preferably no more than 4.5 cm.

13. A powder drying system according to any one of the preceding claims, wherein the powder processing unit of the powder drying system (1) comprises a spray dryer with a drying chamber (2).

14. A powder drying system according to any one of the preceding claims, wherein the filter unit (400) further comprises a cleaning arrangement (430) including at least one nozzle (431) associated to a respective bag filter (407) for cleaning thereof

15. A powder drying system according to claim 14, wherein further comprising a cleaning arrangement having a plurality of nozzles (431), wherein the nozzles have nozzle inlet diameter (i), a nozzle throat diameter (t), a nozzle exit diameter (e), and a length (L), and wherein the ratio between the nozzle throat diameter (t) and the length (L) lies in the range 0.02 to 0.2, preferably 0.05 to 0.15, and even more preferably 0.07 to 0.13.

16. A powder drying system according to any one of the preceding claims, wherein said plurality of bag filters (407) is located in the space between the periphery of the filter unit (400) defined by a central portion (406) of the filter unit (400) and the periphery of the extension of the internal duct (415) adjacent the filtering chamber (401).

17. A method of operating a powder drying system,
which powder drying system is according to any one of claims 1 to 16,
supplying gas to be filtered to the filtering chamber (401) via the inlet (410),
allowing the gas to pass through the bag filter wall and upwards in the plurality of bag filters (407) and into the exhaust chamber (403) via the top opening of the respective bag filters of said plurality of bag filters (407), and
discharging the filtered gas through the outlet (420).

## Patentansprüche

1. Pulvertrocknungssystem, umfassend:
mindestens eine Pulververarbeitungseinheit (1) und
mindestens eine Filtereinheit (400), die eine mittlere vertikale Achse (405) definiert und Folgendes aufweist:
eine Filterkammer (401), die eine Vielzahl von Beutelfiltern (407) aufnimmt, die jeweils eine Beutelfilterwand, eine obere Öffnung und eine Länge im Bereich von 1 m bis 8 m aufweisen,
einen oberen Abschnitt (402) und
eine Auslasskammer (403) an oder nahe dem oberen Abschnitt (402),
wobei die Filterkammer (401) mit einem Einlass (410) versehen ist, der dazu ausgestaltet ist, den Eintritt von verarbeitetes Pulver führendem Gas, das durch Hindurchgehen durch die Beutelfilterwand der Beutelfilter (407) gefiltert werden soll, zu gestatten, und die Auslasskammer (403) einen Austritt (420) aufweist, der dazu ausgestaltet ist, das Auslassen von gefiltertem Gas, das von den Beutelfiltern durch die obere Öffnung davon nach oben strömt, zu gestatten,
wobei der Einlass (410) der Filterkammer (401) an dem oberen Abschnitt (402) der Filtereinheit (400) positioniert ist und der Einlass (410) mindestens einen Einlasskanalabschnitt aufweist, der der Filterkammer (401) benachbart und im Wesentlichen mittig in dem oberen Abschnitt (402) der Filtereinheit (400) angeordnet ist,
wobei der Einlasskanalabschnitt im Wesentlichen koaxial zu der mittleren vertikalen Achse (405) angeordnet ist, so dass das in die Filtereinheit (400) eintretende Gas entlang der mittleren vertikalen Achse im Wesentlichen nach unten strömen kann,
wobei der mindestens eine Einlasskanalabschnitt einen inneren Kanal (415) und einen Übergangskanal (413) umfasst,
wobei der innere Kanal (415) der Filterkammer (401) benachbart ist und sich im Wesentlichen parallel zu der mittleren vertikalen Achse (405) erstreckt,
wobei der Übergangskanal (413) den inneren Kanal (415) mit einem abgewinkelten Kanal (411) verbindet,
wobei der abgewinkelte Kanal (411) die Form von Rohrsegmenten aufweist, die einen Bogen von im Wesentlichen 90 Grad zu dem inneren Kanal (415) bilden,
wobei der Abstand zwischen dem abgewinkelten Kanal (411) und dem der Filterkammer (401) benachbarten Ende des inneren Kanals (415) die Länge eines Beutelfilters (407) überschreitet.

2. Pulvertrocknungssystem nach Anspruch 1, wobei der innere Kanal (415) an dem der Filterkammer (401) benachbarten Ende eine hexagonale Form aufweist.

3. Pulvertrocknungssystem nach einem der vorhergehenden Ansprüche, wobei der Austritt (420) horizontal mit der Auslasskammer (403) an dem oberen Abschnitt (402) der Filtereinheit (400) verbunden ist.

4. Pulvertrocknungssystem nach Anspruch 3, wobei der Austritt (420) einen Übergangskanal (421) und einen geraden Kanal (423) umfasst.

5. Pulvertrocknungssystem nach Anspruch 4, wobei die Ränder (421a) zwischen dem Übergangskanal (421) und der Auslasskammer (403) und/oder die Ränder (421b) zwischen dem Übergangskanal (421) und dem geraden Kanal (423) abgerundet sind.

6. Pulvertrocknungssystem nach Anspruch 4 oder 5, wobei der Querschnitt des geraden Kanals (423) im Wesentlichen kreisförmig ist und der Querschnitt des Übergangskanals (421) von einem im Wesentlichen rechteckigen Querschnitt an der Verbindung zu der Auslasskammer (403) und im Wesentlichen kreisförmig an dem dem geraden Kanal (423) benachbarten Ende variabel ist.

7. Pulvertrocknungssystem nach einem der vorhergehenden Ansprüche, wobei die Vielzahl von Beutelfiltern (407) mindestens 50 Beutelfilter (407), vorzugsweise mindestens 100 Beutelfilter (407) und weiter bevorzugt mindestens 200 Beutelfilter (407) und noch weiter bevorzugt mindestens 400 Beutelfilter (407) umfassen.

8. Pulvertrocknungssystem nach einem der vorhergehenden Ansprüche, ferner umfassend eine Anzahl von Beutelfiltersegmenten (409), wobei jedes eine Vielzahl von Beutelfiltern (407) aufweist.

9. Pulvertrocknungssystem nach den Ansprüchen 2 und 8, wobei die Anzahl von Beutelfiltersegmenten (409) sechs beträgt, entsprechend einer jeweiligen Seite des hexagonalen Endes des inneren Kanals (415).

10. Pulvertrocknungssystem nach einem der vorhergehenden Ansprüche, wobei die Beutelfilter nicht länger als 6 m, vorzugsweise nicht länger als 5 m sind.

11. Pulvertrocknungssystem nach einem der vorhergehenden Ansprüche, wobei die Beutelfilter einen Durchmesser (D) im Bereich von 10 bis 25 cm, vorzugsweise im Bereich von 15 bis 20 cm und noch bevorzugter im Bereich von 17 bis 19 cm aufweisen.

12. Pulvertrocknungssystem nach einem der vorhergehenden Ansprüche, wobei der Abstand (S) zwischen Beutelfiltern nicht mehr als 5 cm, vorzugsweise nicht mehr als 4,5 cm beträgt.

13. Pulvertrocknungssystem nach einem der vorhergehenden Ansprüche, wobei die Pulververarbeitungseinheit des Pulvertrocknungssystems (1) einen Sprühtrockner mit einer Trocknungskammer (2) umfasst.

14. Pulvertrocknungssystem nach einem der vorhergehenden Ansprüche, wobei die Filtereinheit (400) ferner eine Reinigungsanordnung (430) umfasst, die mindestens eine Düse (431) aufweist, die einem jeweiligen Beutelfilter (407) zu dessen Reinigung zugeordnet ist.

15. Pulvertrocknungssystem nach Anspruch 14, ferner umfassend eine Reinigungsanordnung, die eine Vielzahl von Düsen (431) aufweist, wobei die Düsen einen Düseneinlassdurchmesser (i), einen Düsenhalsdurchmesser (t), einen Düsenaustrittsdurchmesser (e) und eine Länge (L) aufweisen, und wobei das Verhältnis zwischen dem Düsenhalsdurchmesser (t) und der Länge (L) im Bereich von 0,02 bis 0,2, vorzugsweise 0,05 bis 0,15 und noch bevorzugter 0,07 bis 0,13 liegt.

16. Pulvertrocknungssystem nach einem der vorhergehenden Ansprüche, wobei sich die Vielzahl von Beutelfiltern (407) in dem Raum zwischen dem Umfang der Filtereinheit (400), der durch einen mittleren Abschnitt (406) der Filtereinheit (400) definiert ist, und dem Umfang der Verlängerung des inneren Kanals (415), die der Filterkammer (401) benachbart ist, befinden.

17. Verfahren zum Betreiben eines Pulvertrocknungssystems,
wobei das Pulvertrocknungssystem einem der Ansprüche 1 bis 16 entspricht,
Zuführen von zu filterndem Gas zu der Filterkammer (401) über den Einlass (410),
Gestatten, dass das Gas durch die Beutelfilterwand und nach oben in der Vielzahl von Beutelfiltern (407) und in die Auslasskammer (403) über die obere Öffnung der jeweiligen Beutelfilter der Vielzahl von Beutelfiltern (407) geht, und
Austragen des gefilterten Gases durch den Austritt (420).

## Revendications

1. Système de séchage de poudre comprenant
au moins une unité de traitement de poudre (1), et
au moins une unité de filtre (400) définissant un axe vertical central (405) et comprenant
une chambre de filtration (401) contenant une pluralité de manches filtrantes (407), chacune ayant une paroi de manche filtrante, une ouverture supérieure et une longueur comprise entre 1 m et 8 m,
une partie supérieure (402), et
une chambre de rejet (403) au niveau ou à proximité de la partie supérieure (402),
dans lequel la chambre de filtration (401) est pourvue d'une entrée (410) configurée pour permettre l'entrée de gaz transportant une poudre traitée destiné à être filtré par son passage à travers la paroi de manche filtrante des manches filtrantes (407), et la chambre de rejet (403) a une sortie (420) configurée pour permettre le rejet du gaz filtré s'écoulant vers le haut depuis les manches filtrantes par l'ouverture supérieure de celles-ci,
dans lequel l'entrée (410) de la chambre de filtration (401) est positionnée au niveau de la partie supérieure (402) de l'unité de filtre (400), et ladite entrée (410) comprend au moins une section de conduit d'entrée adjacente à la chambre de filtration (401) et disposée sensiblement au centre de la partie supérieure (402) de l'unité de filtre (400),
ladite section de conduit d'entrée étant disposée sensiblement coaxialement à l'axe vertical central (405) de sorte que le gaz entrant dans l'unité de filtre (400) puisse s'écouler sensiblement vers le bas le long de l'axe vertical central,
dans lequel ladite au moins une section de conduit d'entrée comprend un conduit interne (415) et un conduit de transition (413),
ledit conduit interne (415) étant adjacent à la chambre de filtration (401) et s'étendant sensiblement parallèlement à l'axe vertical central (405),
ledit conduit de transition (413) reliant le conduit interne (415) à un conduit coudé (411),
ledit conduit coudé (411) ayant la forme de segments de tuyau formant un coude sensiblement à 90 degrés par rapport au conduit interne (415),
dans lequel la distance entre le conduit coudé (411) et l'extrémité du conduit interne (415) adjacente à la chambre de filtration (401) dépasse la longueur d'une manche filtrante (407).

2. Système de séchage de poudre selon la revendication 1, dans lequel le conduit interne (415) à l'extrémité adjacente à la chambre de filtration (401) a une forme hexagonale.

3. Système de séchage de poudre selon l'une quelconque des revendications précédentes, dans lequel la sortie (420) est reliée horizontalement à la chambre de rejet (403) au niveau de la partie supérieure (402) de l'unité de filtre (400).

4. Système de séchage de poudre selon la revendication 3, dans lequel la sortie (420) comprend un conduit de transition (421) et un conduit droit (423).

5. Système de séchage de poudre selon la revendication 4, dans lequel les bords (421a) entre le conduit de transition (421) et la chambre de rejet (403) et/ou les bords (421b) entre le conduit de transition (421) et le conduit droit (423) sont arrondis.

6. Système de séchage de poudre selon la revendication 4 ou 5, dans lequel la section transversale du conduit droit (423) est sensiblement circulaire et la section transversale du conduit de transition (421) est variable à partir d'une section transversale sensiblement rectangulaire au niveau du raccord avec la chambre de rejet (403) et sensiblement circulaire à l'extrémité adjacente au conduit droit (423).

7. Système de séchage de poudre selon l'une quelconque des revendications précédentes, dans lequel ladite pluralité de manches filtrantes (407) comprend au moins 50 manches filtrantes (407), de préférence au moins 100 manches filtrantes (407), et plus préférablement au moins 200 manches filtrantes (407), et encore plus préférablement au moins 400 manches filtrantes (407).

8. Système de séchage de poudre selon l'une quelconque des revendications précédentes, comprenant en outre un certain nombre de segments de manches filtrantes (409), dans lequel chacun comprend une pluralité de manches filtrantes (407).

9. Système de séchage de poudre selon les revendications 2 et 8, dans lequel le nombre de segments de manches filtrantes (409) est de six, correspondant à un côté respectif de l'extrémité hexagonale du conduit interne (415).

10. Système de séchage de poudre selon l'une quelconque des revendications précédentes, dans lequel les manches filtrantes ne mesurent pas plus de 6 m, de préférence pas plus de 5 m.

11. Système de séchage de poudre selon l'une quelconque des revendications précédentes, dans lequel les manches filtrantes ont un diamètre (D) dans la plage de 10 à 25 cm, de préférence dans la plage de 15 à 20 cm, et encore plus préférablement dans la plage de 17 à 19 cm.

12. Système de séchage de poudre selon l'une quelconque des revendications précédentes, dans lequel la distance (S) entre les manches filtrantes n'est pas supérieure à 5 cm, de préférence pas supérieure à 4,5 cm.

13. Système de séchage de poudre selon l'une quelconque des revendications précédentes, dans lequel l'unité de traitement de poudre du système de séchage de poudre (1) comprend un séchoir par atomisation avec une chambre de séchage (2).

14. Système de séchage de poudre selon l'une quelconque des revendications précédentes, dans lequel l'unité de filtre (400) comprend en outre un dispositif de nettoyage (430) comprenant au moins une buse (431) associée à une manche filtrante respective (407) pour son nettoyage

15. Système de séchage de poudre selon la revendication 14, comprenant en outre un dispositif de nettoyage ayant une pluralité de buses (431), dans lequel les buses ont un diamètre d'entrée de buse (i), un diamètre de col de buse (t), un diamètre de sortie de buse (e) et une longueur (L), et dans lequel le rapport entre le diamètre de col de buse (t) et la longueur (L) est compris entre 0,02 et 0,2, de préférence 0,05 et 0,15, et encore plus préférablement 0,07 et 0,13.

16. Système de séchage de poudre selon l'une quelconque des revendications précédentes, dans lequel ladite pluralité de manches filtrantes (407) est située dans l'espace entre la périphérie de l'unité de filtre (400) définie par une partie centrale (406) de l'unité de filtre (400) et la périphérie du prolongement du conduit interne (415) adjacent à la chambre de filtration (401).

17. Procédé de mise en œuvre d'un système de séchage de poudre,
qui est un système de séchage de poudre selon l'une quelconque des revendications 1 à 16,
fournir du gaz à filtrer à la chambre de filtration (401) par l'entrée (410),
permettre au gaz de passer à travers la paroi de manche filtrante et vers le haut dans la pluralité de manches filtrantes (407) et dans la chambre de rejet (403) par l'ouverture supérieure des manches filtrantes respectives de ladite pluralité de manches filtrantes (407), et
rejeter le gaz filtré par la sortie (420).
